# EUROPEAN PATENT APPLICATION

(11) **EP 4 389 412 A1**
(43) Date of publication of application: **26.06.2024**
(21) Application number: 23218022.4
(22) Date of filing: 19.12.2023
(51) Int. Cl.: B32B 3/06, B32B 5/02, B32B 21/02, B32B 21/10, B32B 29/02, E04F 15/10

(54) **FLOOR PANEL ELEMENT FOR A STORAGE PLATFORM**

(30) Priority: 21.12.2022 DE 102022134317
(71) Applicant: Otto Schneider GmbH, 63303 Dreieich (DE)
(72) Inventor: Schneider, Hermann, 63303 Dreieich (DE)
(74) Representative: Unilin Technologies

(57) **Abstract**

The invention relates to a floor panel element (1) for a storage platform, with following features:
- a particle board (2),
- a barrier layer (3) for flame retardancy, disposed on the bottom side of the particle board (2) and comprising fibres (3.1) having a melting point of more than 500°C.

## Description

The present invention relates to a floor panel element. Further subjects of the invention are a floor panel system, a storage system and a method for producing a floor panel element. These floor panel elements are preferably provided to form intermediate floors, for example an intermediate floor of a building for storing goods. Such intermediate floors can be so-called mezzanine floors.

To impart fire-retarding quality to particle boards, it has hitherto been the practice to scatter a specific flame retardant into at least the middle layer of the particle board. A result of this, however, is a marked drop in the stress capacity of the particle board, the additions having impaired the interlocking of the chips within the particle board. Consequently, a particle board of this kind can no longer be reliably used in storage industry facilities, as the required static stress resistance can no longer be ensured.

Furthermore, DE 34 11 807 A1 discloses a prefabricated panel for raised access floors that comprises at least one load-accommodating layer of particle board material, a lower layer of fire-resistant material, and a lower covering composed of a thin metal layer. A disadvantage here is that for a given thickness of the prefabricated panel, the additional layer of fire-resistant material means that the layer of particle board material must be smaller, and so here as well there is a drop in the load capacity and adequate mechanical stress resistance can no longer be ensured.

Document DE 80 29 270 U1 discloses a floor panel with flexural resistance for producing raised access floors.

Document DE 10 2005 044 528 A1 describes a board which comprises a support panel and a top layer connected to the support panel by full-area bonding with an adhesive.

DE 10 2013 213 092 A1, which is the closest prior-art starting point for the invention, discloses a floor panel element comprising a particle board, a flame-retardant adhesive and a metal foil and also a lower covering composed of a plastic foil.

The invention has the object of creating a further-improved floor panel element, floor panel system, storage system, and a method for producing a floor panel element.

The object of the invention, is achieved with the features of the independent claims. Embodiments of the invention are specified in the dependent claims.

According to embodiments of the invention, the floor panel element comprises a particle board and a barrier layer for flame retardancy disposed on the bottom side of the particle board. The barrier layer comprises fibres which have a melting point of more than 500°C. Said particle board can also be indicated as a chipboard.

Embodiments of the invention are particularly advantageous since the fibres of the barrier layer have a melting point of > 500°C and, because of the fibre structure, the barrier layer has a lower thermal conductivity than a metal foil. The fibres may more particularly be glass fibres, ceramic fibres or other non-metallic fibres of low thermal conductivity. This further improves the flame retardancy properties of the barrier layer, especially if the barrier layer is configured as a nonwoven web of such fibres.

According to embodiments of the invention, the barrier layer is formed by a random-laid fabric composed of glass fibres embedded in a meltable/fusible substance, for example a resin. This has the advantage that, by exposure to pressure and temperature in a press, the barrier layer is able to form an intimate connection both to the bottom side of the particle board and, optionally, to a paper layer, more particularly a decorative layer, that forms the bottom side of the floor panel element.

According to embodiments of the invention, the glass fibres have a diameter of at least 8 µm, more particularly at least 10 µm, more particularly between 10 and 11 µm.

According to embodiments of the invention, the glass fibres have a melting point of more than 900°C, more particularly more than 1000°C, more particularly between 1050°C and 1150°C.

According to embodiments of the invention, the barrier layer has a grammage of 200 g/m² to 400 g/m², more particularly 300 g/m² Said barrier layer than preferably comprises between 100 g/m² and 200 g/m² of glass fibres, more particularly 100 g/m² of glass fibres.

According to embodiments of the invention, the barrier layer has a thickness of between 0.1 mm and 0.3 mm, more particularly 0.2 mm. This is particularly advantageous since embodiments of the invention enable such low thickness in conjunction with advantageous mechanical properties, particularly with regard to the load capacity and with regard to the attainable fire protection class. All in all it is possible here to achieve a standard thickness for the floor panel element of, for example, 38 mm.

According to embodiments of the invention, the barrier layer comprises a resin, more particularly melamine resin. More particularly, a random-laid woven fabric or nonwoven web composed, for example, of glass fibres may be embedded in the resin; through exposure to pressure and temperature, the resin then forms an intimate connection between the bottom side of the particle board and the barrier layer and hence also the fibres within the barrier layer. During a press operation, for example, the resin penetrates the pores in the bottom side of the particle board and, after it has solidified, then forms a form-fitting connection to the bottom side of the particle board.

According to embodiments of the invention, the glass fibres are of aluminum borosilicate glass containing less than 2% of alkali metal oxides. According to embodiments of the invention, the glass fibres have a melting point of between 800-900°C and a softening temperature of between 825°C and 860°C. According to further embodiments of the invention, the glass fibres have a density of between 2.59 and 2.62 kg/cubic decimeter. According to embodiments of the invention, the glass fibres are of aluminum silicate glass with additions of magnesium oxide, or of aluminum silicate glass with additions of calcium oxide and/or magnesium oxide. According to embodiments of the invention, the fibres have a hollow cross section. Such embodiments respectively are particularly advantageous since they enable particularly high mechanical criteria even at high temperatures in combination with a relatively low weight and a low thickness of the barrier layer.

Embodiments of the invention are additionally particularly advantageous since a nonwoven web is more mechanically robust than a metal foil; this as well improves the fire protection, as it reduces the risk of the barrier layer being damaged.

Embodiments of the invention are particularly advantageous since there is no need for an elastic interlayer, the barrier layer already being elastic by virtue of the resin.

According to embodiments of the invention, a paper, for example a white, coloured or patterned paper, more particularly a decorative paper, is disposed at the bottom side of the barrier layer.

The paper is advantageously impregnated with a resin, allowing this resin to form a cohesive connection to the resin of the barrier layer. The resins in question may more particularly be identical resins or resins which are miscible with one another. The resins may be melamine resins.

According to embodiments of the invention, the paper, more particularly the decorative paper, comprises titanium dioxide particles. The paper preferably has a reflectance of at least 0.81%, preferably between 0.88% and less than 100%. A reflectance of, for example, between 0.88% but less than 100% is particularly advantageous since, by virtue of the reflection, electrical energy for lighting is saved and at the same time a specular effect is avoided. The paper can be a white paper. A white paper will heat up less quickly, such that this enhances the fire retardancy of the floor panel element.

In a further aspect, the invention relates to a method for manufacturing a floor panel element.

According to embodiments of the invention, first a stack composed of a particle board layer, a barrier layer and a paper is provided. This stack is then exposed in a press, for example, to a pressure of at least 170 bar, more particularly at least 190 bar, more particularly up to 400 bar or 450 bar, and to a temperature of at least 160°C, more particularly between 175°C and 180°C.

Embodiments of the method of the invention are particularly advantageous if a press is used for exposing the stack to pressure and temperature, more particularly a short-cycle press with cycle times of less than 30 sec, more particularly 10 sec. As a result of the paper, the press is protected from the abrasive effect of the fibres in the barrier layer, so giving the press a longer lifetime.

As a result of the temperature exposure, the bottom side of the floor panel element acquires a reflectance of more than 0.81%, preferably 0.88% and preferably less than 100%, so firstly saving energy for the lighting of the store and at the same time preventing a mirror effect or blinding effect. This is a result of the temperature exposure causing the barrier layer - here, that is, the nonwoven glass web - to turn a milky grey, allowing the desired reflectance to be achieved in combination with the paper.

Embodiments of the invention are further advantageous since a floor panel element for a storage platform is created which, with a high elasticity modulus and flexural strength, exhibits improved static stress resistance in conjunction with a fire-retarding quality.

In a further aspect, the invention is particularly advantageous since it allows a storage system to be created that, even in the case of relatively large areas, ensures that the people located thereon, can be safely evacuated in the event of fire.

According to embodiments of the invention, the floor panel element has a thickness of 38 mm and therefore meets the standard, this being made possible by a barrier layer thickness of less than 0.4 mm, more particularly 0.2 mm, with a high fire protection class being attained. It is possible more particularly to attain the fire protection class according to EN 13501-1, namely BS2D0, CS2D0 or CS1D0.

According to embodiments of the invention, in the event of fire, heat is transmitted from the bottom side to the top side or to the particle board only, if at all, after an interval of time. After a certain duration of fire, therefore, the floor panel elements are still safely accessible. The storage platform can therefore be readily cleared. The barrier layer also minimizes smoke breakthrough.

In the present invention, the high mechanical quality of the particle board means that it constitutes the stress-accommodating part of the panel. Preference is given to using a highly densified particle board with resin glues, preferably melamine resin and urea resin. The particle board has a density, for example, of about 740 kg/m³ ± 5%. A particle board of this kind in fact exceeds the requirements of standard DIN EN 312 P6, "Heavy-duty panels for load-bearing for use in dry construction", by virtue of a higher elasticity modulus and a higher flexural strength than called for by the standard. The particle board more preferably has a thickness of about 38 mm.

Furthermore, in a further preferred embodiment, the floor panel element of the invention meets the requirement for low-flammability building materials (B1) under DIN 4102-1.

In one exemplary embodiment of the present invention, a cover layer is disposed on the top side of the particle board and serves as a walking or stepping surface. The cover layer preferably comprises a resin layer, with preference a melamine resin layer. It is also conceivable, however, for the cover layer to comprise a paper layer or decorative layer as well as the resin layer, or just a paper or decorative layer. The cover layer more preferably is a slip-resistant, profiled and/or electrostatic layer. The slip-resistant quality of the cover layer ensures that people located on the floor panels in the event of fire are able to leave them rapidly without any risk of slipping off. The cover layer may comprise abrasion-resistant parts, such as corundum, for example. Furthermore, the abrasion-resistant parts may also project above the cover layer.

In another advantageous configuration, the floor panel element at least on one side has a groove for accommodating a tongue. It is also conceivable, however, for floor panel elements to be provided with both groove and tongue. Groove and tongue are preferably located on opposite sides. The presence of groove and/or tongue allows individual floor panel elements to be connected to one another quickly and easily.

A floor panel system for forming a platform covering is a further subject of the invention. The floor panel system comprises at least two floor panel elements of the invention.

In one advantageous configuration, two abutting floor panel elements are connected by a tongue-and-groove connection. For this, the floor panel elements have grooves, preferably at the mutually facing sides, for accommodating extrinsic tongues. The extrinsic tongues are advantageously composed of metal, preferably of steel. As a result of the use of metal tongues, in the event of fire, flame breakthrough at the connection point is minimized or may even be prevented entirely. Additionally, the metal tongue ensures the static stress resistance of the floor panel system.

In another configuration of the present invention, the extrinsic tongues do not extend over the entire length of the floor panel elements, so leaving an air gap of 1 mm, for example, between the extrinsic tongues of adjacent floor panel elements in a platform covering; the air gap prohibits conduction of heat between extrinsic tongues of the adjacent floor panel elements. The air gap ensures that the extrinsic tongues have mechanical contact exclusively with the particle board and therefore that unwanted conduction of heat between adjacent floor panel elements is reduced.

It is, however, also conceivable to forgo an extrinsic tongue in the floor panel system and for the floor panel elements themselves to comprise tongues or plugs.

The floor panel systems are utilized preferably in storage industry facilities and warehouses.

A further subject of the invention is a storage system. The storage system of the invention comprises a framework with supports and longitudinal beams, and a floor panel system of the invention, the floor panel system lying on the longitudinal beams. The framework is preferably composed of metal.

In one advantageous configuration, the longitudinal beams are secured to the corresponding supports by way of known fastening means. With preference, mutually opposite longitudinal beams are connected to one another via a plurality of profiles disposed perpendicularly to them. The supports, the longitudinal beams and, where present, the profiles then form the framework of the storage system. The longitudinal beams preferably extend horizontally and parallel to each other. The profiles preferably extend horizontally and parallel to each other and perpendicular to the longitudinal beams. The supports can extend vertically.

In a further embodiment, the floor panel elements which lie on the longitudinal beams and form a floor panel system, are preferably of a width such that they are able to bridge two longitudinal beams disposed in parallel.

The tongue-and-groove connection between the individual floor elements preferably runs perpendicular to the longitudinal beams. In one advantageous embodiment, the extrinsic tongues, composed preferably of metal, do not extend over the entire length of the floor panel elements. As a result, contact between the tongues and the metal framework, and a consequent increase in the thermal conductivity of the floor panel systems, which the invention is intended to prohibit, are prevented.

In another embodiment, the floor panel systems are secured with screw connections on the longitudinal beams.

The invention and also the technical circumstances are illustrated in greater detail below using the figures. It should be pointed out that the figures show one particularly preferred variant embodiment of the invention. The invention, though, is not confined to the variant embodiment shown. In particular, the invention embraces, where technically rational, any desired combinations of the technical features which are set out in the dependent claims or described in the description as being relevant to the invention.

In the figures:
- Fig. 1A: shows a schematic sectional representation of a stack of a floor panel element of the invention prior to pressing;
- Fig. 1B: shows the schematic sectional representation of Figure 1A after pressing;
- Fig. 2: shows a schematic sectional representation of a floor panel element of the invention with a cover layer;
- Fig. 3: shows a schematic sectional representation through a tongue-and-groove connection of a floor panel system of the invention;
- Fig. 4: shows a schematic representation of a storage system of the invention.

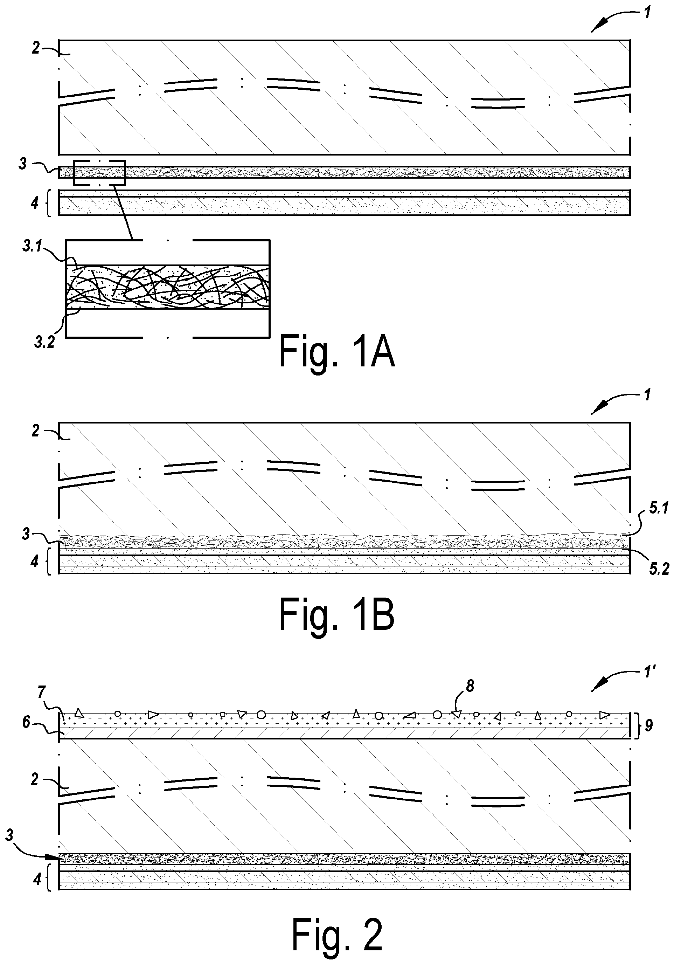

Figure 1A shows one embodiment of a floor panel element 1 of the invention in a schematic sectional representation. The floor panel element 1 is layered and comprises a particle board 2, which is preferably highly densified. Disposed on the bottom side of the particle board 2 is a barrier layer 3 for flame retardancy. The barrier layer 3 comprises fibres 3.1, more particularly glass fibres, ceramic fibres or other non-metallic fibres of low thermal conductivity. The barrier layer 3 is more particularly a nonwoven web impregnated with a resin 3.2, the resin possibly being melamine resin.

Disposed at the bottom side of the barrier layer 3 is a paper 4, which may be a decorative paper, and which may likewise have been impregnated with a resin. The particle board 2, the barrier layer 3 and the paper 4 form a stack which has been shaped in a press, with exposure to pressure and temperature, to form the floor panel element 1. Indeed, as a result of the pressure and temperature exposure, the resin 3.2 in the barrier layer 3 is activated, to form a form-fitting connection 5.1 to the bottom side of the particle board 2 and a cohesive connection 5.2 to the paper 4, if the paper 4 is impregnated with the same resin as the barrier layer 3, or the resins of the barrier layer 3 and of the paper 4 are at least miscible with one another. The two resins are preferably melamine resin.

The two connections 5.1 and 5.2 are represented in Figure 1B.

According to embodiments of the invention, the fibres 3.1 are glass fibres with a diameter of 8 to 15 µm, more particularly 10 µm to 11 µm. These glass fibres form a random-laid fabric, i.e. a nonwoven web, which is impregnated with the resin 3.2 - for example, melamine resin, phenolic resin or urea resin. The glass fibres are therefore embedded in a meltable substance, e.g. a fusible substance.

According to one embodiment of the invention, the barrier layer 3 is a nonwoven glass web having a grammage of for example 300 g/m², comprising for example 150 g/m² of glass fibres.

According to embodiments of the invention, the barrier layer 3 has a thickness of approximately 0.2 mm and therefore the thickness is negligible, allowing the floor panel element 1 to have a standardized thickness of 38 mm, for example.

The paper 4 as well may have been impregnated with a meltable/fusible substance - that is, likewise for example with melamine resin. The decorative paper 4 comprises titanium dioxide particles and is white. The bottom side of the floor panel element, formed by the paper 4, has a reflectance of between preferably 0.88% and < 100 %. This is a result of the pressure and temperature exposure in the press, causing the nonwoven glass web of the barrier layer 3 to take on a milky grey colouration. Such reflectance is advantageous on the one hand to save energy for the lighting of the store and on the other hand to prevent a mirror effect or blinding effect.

For the production of the floor panel element 1, the stack shown in Figure 1a is first formed, and is then exposed to pressure and temperature in a press, more particularly a short-cycle press. This activates the resin, more particularly the melamine resin, in the barrier layer 3 and in the paper 4. The resin 3.2 penetrates from the barrier layer 3 into the surface of the particle board 2, where it forms an intimate form-fitting connection. Additionally, the resin of the paper 4 mixes with the resin 3.2 of the barrier layer 3 to form a cohesive connection. This takes place, for example, at a pressure of at least 190 bar, more particularly up to 400 bar or 450 bar, at a temperature of 175°C to 180°C. The higher the pressure selected here, the shorter the cycle times achievable, of - for example - 30 sec, 10 sec or less.

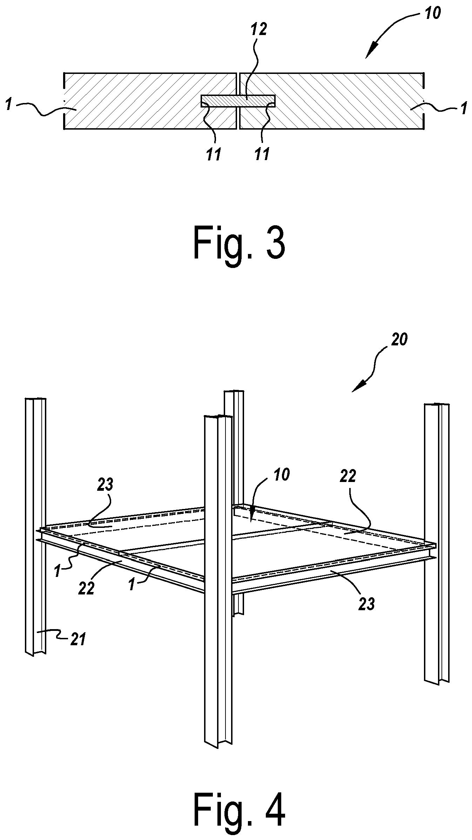

After the production of the floor panel element 1, lastly, groove/tongue can be milled onto the end face of the floor panel element 1. In this case, an extrinsic tongue 12 may also be employed - in this regard, compare the embodiment of Figure 3.

Embodiments of the invention are particularly advantageous, since through construction of the floor panel element 1 in accordance with the invention it is possible to ensure that in the event of fire, the transmission of heat from the bottom side to the top side takes place, if at all, only after an interval of time and, furthermore, the mechanical stability is ensured, allowing trouble-free evacuation to take place.

The floor panel element 1 of the invention is preferably produced in just one operation. For this, the individual layers are joined under defined pressure and heat.

Fig. 2 shows a floor panel element 1' of the invention with a cover layer 9. The cover layer 9 is composed of a resin layer 6 and a paper layer 7. The paper layer 7 comprises abrasion-resistant parts 8 which project partly upward beyond the layer. A cover layer 9 configured in this way is slip-resistant; consequently, if it is necessary to depart the floors rapidly, slipping is prevented, otherwise leading to an additional hazard source.

Fig. 3 represents a tongue-and-groove connection of a floor panel system 10 of the invention. At the mutually facing sides, the individual floor panel elements 1 each have a groove 11, which extends over the entire side of a floor panel element 1. Located in the space formed by the grooves 11 is an extrinsic tongue 12. The extrinsic tongue 12 is preferably a metal tongue. Using an extrinsic tongue 12 composed of metal improves the static stress resistance of the floor panel system 10 and in the event of fire, flame breakthrough can be minimized at the connection point. The extrinsic tongue 12 is preferably shorter than the groove 11, and so air gaps remain between the ends of the extrinsic tongues 12 of adjacent floor panel elements 1 in a platform covering formed by multiple floor panel elements 1. As a result, contact with the metal framework is also avoided.

Indeed, if the extrinsic tongues 12 were to extend over the entire length of each groove, the ends of mutually opposite extrinsic tongues would touch one another and so produce an undesirably effective conduction of heat from one floor panel element 1 to the adjacent floor panel element 1. Corresponding considerations are valid with regard to contact with the metal frame.

Fig. 4 shows a storage system 20 of the invention. In the longitudinal store direction, longitudinal beams 22 run, and are secured on corresponding supports 21 via known fastening means. Mutually opposite longitudinal beams 22 are each connected to one another by a plurality of profiles 23 disposed perpendicularly to them. The supports 21, the longitudinal beams 22 and the profiles 23 form the framework of the storage system 20. Lying on the longitudinal beams 22 are the floor panel elements 1, forming a floor panel system 10. The width of the floor panel elements 1 is such that they bridge two longitudinal beams 22 disposed in parallel. The tongue-and-groove connection between the individual floor elements 1 runs perpendicularly to the longitudinal beams 22.

The invention also relates to the following numbered paragraphs:
1. Floor panel element (1) for a storage platform, with the following features:
   - a particle board (2),
   - a barrier layer (3) for flame retardancy, disposed on the bottom side of the particle board (2) and comprising fibres (3.1) having a melting point of more than 500°C.
2. Floor panel element (1) according to paragraph 1, wherein the barrier layer (3) is a web, preferably a non-woven web.
3. Floor panel element (1) according to paragraph 1 or 2, wherein the fibres are glass fibres, ceramic fibres or other non-metallic fibres or a mixture of such fibres.
4. Floor panel element (1) according to paragraph 1, 2 or 3, wherein the barrier layer is formed by a random-laid fabric composed of glass fibres (3.1) embedded in a meltable substance (3.2).
5. Floor panel element (1) according to paragraph 4, wherein the glass fibres have a diameter of at least 8 µm, more particularly at least 10 µm, more particularly between 10 and 11 µm.
6. Floor panel element (1) according to paragraph 4 or 5, wherein the glass fibres have a melting point of more than 900°C, more particularly more than 1000°C, more particularly between 1050°C and 1150°C.
7. Floor panel element (1) according to paragraph 4, 5 or 6, wherein the barrier layer (3) has a grammage of 200 g/m² to 400 g/m², more particularly 300 g/m², wherein said barrier layer (3) comprises between 100 g/m² and 200 g/m² of glass fibres, more particularly 100 g/m² of glass fibres.
8. Floor panel element (1) according to any of the preceding paragraphs, wherein the barrier layer (3) has a thickness of between 0.1 and 0.3 mm, more particularly 0.2 mm.
9. Floor panel element (1) according to any of the preceding paragraphs, wherein the barrier layer (3) comprises a resin (3.2), the resin being more particularly a melamine resin.
10. Floor panel element (1) according to paragraph 9, wherein the resin (3.2) connects (5.1) the barrier layer (3) to the bottom side of the particle board, preferably form-fittingly.
11. Floor panel element (1) according to paragraph 9 or 10, wherein the floor panel element (1) comprises a paper (4), wherein said paper (4) is disposed on the bottom side of the barrier layer (3) and is impregnated with a resin, wherein said resin preferably forms a cohesive connection (5.2) to the resin of the barrier layer (3).
12. Floor panel element (1) according to paragraph 11, wherein both the barrier layer (3) and the paper (4) are impregnated with the same resin, more particularly melamine resin.
13. Floor panel element (1) according to paragraph 11 or 12, wherein the paper (4) comprises titanium dioxide particles and has a reflectance of at least 0.81%, preferably between 0.88% and < 100%.
14. Floor panel element (1) according to any of the preceding paragraphs, wherein a cover layer (9) is disposed on the top side of the particle board (2) and wherein the cover layer (9) is a slip-resistant layer.
15. Floor panel system (10) for forming a platform covering, comprising at least two floor panel elements (1, 1') according to any of the preceding paragraphs.
16. Floor panel system (10) according to paragraph 15, wherein the floor panel elements (1) have grooves (11) at the mutually facing sides for accommodating extrinsic tongues (12).
17. Floor panel system (10) according to paragraph 16, wherein the extrinsic tongue (12) is composed of metal, preferably steel.
18. Floor panel system (10) according to paragraph 17, wherein the extrinsic tongue (12) is configured to be shorter than the groove (11) of the floor panel elements (1), to leave an air gap.
19. Storage system (20) comprising a metal framework with supports (21) and longitudinal beams (22) and a floor panel system (10) according to at least one of paragraph 15 to 18, wherein the floor panel system (10) lies on the longitudinal beams (22).
20. Storage system (20) according to paragraph 19, wherein the floor panel elements (1, 1') of the floor panel system (10) have at least a width to bridge two parallel longitudinal beams (22) of the metal framework.
21. Storage system (20) according to paragraph 18, wherein the extrinsic tongues (12) have no contact with the metal frame.
22. Method for producing a floor panel element (1) according to any of preceding paragraphs 1 to 14, with steps as follows:
   - Providing a stack comprising a particle board layer, a barrier layer and a paper,
   - exposing the stack to a pressure of at least 170 bar, more particularly at least 190 bar, more particularly up to 400 bar or 450 bar, and to a temperature of at least 160°C, more particularly between 175°C and 180°C.
23. Method according to paragraph 22, wherein the barrier layer is impregnated with a first resin (3.2) and the paper is impregnated with a second resin, the first and second resins being miscible with one another or identical, and wherein the pressure and temperature exposure causes activation of the first and second resins, to form a form-fitting connection (5.1) between the barrier layer and the bottom side of the particle board layer and a cohesive connection (5.2) between the bottom side of the barrier layer and the paper, the two resins more particularly being melamine resin.

### List of reference numerals

- 1: floor panel element
- 2: particle board
- 3: barrier layer
- 3.1: fibre
- 3.2: resin
- 4: paper
- 5.1, 5.2: connections
- 6: resin layer
- 7: paper layer
- 8: abrasion-resistant parts
- 9: cover layer
- 10: floor panel system
- 11: groove
- 12: extrinsic tongue
- 20: storage system
- 22: longitudinal beams
- 23: profiles

## Claims

1. Floor panel element (1) for a storage platform, with the following features:
- a particle board (2),
- a barrier layer (3) for flame retardancy, disposed on the bottom side of the particle board (2) and comprising fibres (3.1) having a melting point of more than 500°C.

2. Floor panel element (1) according to Claim 1, wherein the barrier layer (3) is a web, preferably a non-woven web.

3. Floor panel element (1) according to Claim 1 or 2, wherein the fibres are glass fibres, ceramic fibres or other non-metallic fibres or a mixture of such fibres.

4. Floor panel element (1) according to Claim 1, 2 or 3, wherein the barrier layer is formed by a random-laid fabric composed of glass fibres (3.1) embedded in a meltable substance (3.2).

5. Floor panel element (1) according to Claim 4, wherein the barrier layer (3) has a grammage of 200 g/m² to 400 g/m², more particularly 300 g/m², wherein said barrier layer (3) comprises between 100 g/m² and 200 g/m² of glass fibres, more particularly 100 g/m² of glass fibres.

6. Floor panel element (1) according to any of the preceding claims, wherein the barrier layer (3) has a thickness of between 0.1 and 0.3 mm, more particularly 0.2 mm.

7. Floor panel element (1) according to any of the preceding claims, wherein the barrier layer (3) comprises a resin (3.2), the resin being more particularly a melamine resin, and wherein the resin (3.2) preferably connects (5.1) the barrier layer (3) to the bottom side of the particle board, more preferably form-fittingly.

8. Floor panel element (1) according to Claim 7, wherein the floor panel element (1) comprises a paper (4), wherein said paper (4) is disposed on the bottom side of the barrier layer (3) and is impregnated with a resin, wherein said resin preferably forms a cohesive connection (5.2) to the resin of the barrier layer (3).

9. Floor panel element (1) according to Claim 8, wherein the paper (4) comprises titanium dioxide particles and has a reflectance of at least 0.81%, preferably between 0.88% and < 100%.

10. Floor panel element (1) according to any of the preceding claims, wherein a cover layer (9) is disposed on the top side of the particle board (2) and wherein the cover layer (9) comprises a slip-resistant layer.

11. Floor panel system (10) for forming a platform covering, comprising at least two floor panel elements (1, 1') according to any of the preceding claims.

12. Floor panel system (10) according to Claim 11, wherein the floor panel elements (1) have grooves (11) at the mutually facing sides for accommodating extrinsic tongues (12), wherein the extrinsic tongue (12) is preferably composed of metal, for example steel.

13. Floor panel system (10) according to Claim 12, wherein the extrinsic tongue (12) is configured to be shorter than the groove (11) of the floor panel elements (1), to leave an air gap.

14. Storage system (20) comprising a metal framework with supports (21) and longitudinal beams (22) and a floor panel system (10) according to at least one of Claims 11 to 13, wherein the floor panel system (10) lies on the longitudinal beams (22).

15. Method for producing a floor panel element (1) according to any of preceding Claims 1 to 10, with the following steps:
- providing a stack comprising a particle board layer, a barrier layer and a paper,
- exposing the stack to a pressure of at least 170 bar, more particularly at least 190 bar, more particularly up to 400 bar or 450 bar, and to a temperature of at least 160°C, more particularly between 175°C and 180°C.
